# EUROPEAN PATENT APPLICATION

(11) **EP 2 458 461 A1**
(43) Date of publication of application: **30.05.2012**
(21) Application number: 10801991.0
(22) Date of filing: 30.06.2010
(51) Int. Cl.: G05B 11/01, G05D 23/19, H05B 3/00

(54) **METHOD FOR CONFIGURING A CONTROL ELEMENT OF A HEATING RESISTOR REGULATING MEANS AND HEATING RESISTOR REGULATING MEANS**

(30) Priority: 24.07.2009 ES 200930507
(71) Applicant: Especialidades Electricas Daga, S. A., 08100 Barcelona (ES)
(72) Inventor: GÓMEZ ARIVE, Alberto, 08100 Barcelona (ES); BLANCH ESCUDÉ, Daniel, 08100 Barcelona (ES); HUERTA ROMERO, Luis Alberto, 08100 Barcelona (ES)
(74) Representative: Ponti Sales, Adelaida
(86) International application number: PCT/ES2010/070450
(87) International publication number: WO 2011/009986

(57) **Abstract**

Process for configuring a heating resistor (3) regulator (2) control element (1), wherein a representative parameter of the heating resistor (3) is recorded in a memory (4) of the regulator (2), said control element being configured with software that uses it to regulate the power supplied, **characterised in that** it comprises the steps of connecting the regulator (2) to the mains, determining a representative parameter of the heating resistor (3) and recording the parameter in the memory of the regulator (2), in such a manner that configuration of the control element (1) assigned to each heating resistor (3) can be performed automatically upon connecting the regulator (2) to the mains.

## Description

The present invention relates to a process for configuring a heating resistor regulator control element and a heating resistor regulator capable of carrying out said process. It also relates to a heating pad and heating resistor regulator assembly.

### BACKGROUND OF THE INVENTION

Regulators for heating resistors, particularly for heating pads, destined for regulating the electrical power supplied to the resistor in order to reach the desired regulator temperature, are known in the state of the art.

In general, pad manufacturers offer different pad models with different dimensions and for different applications, which implies different electrical resistors and therefore different regulator configurations.

The configuration of the regulator software, housed for example in a microprocessor of the regulator, depends mainly on the characteristics of the heating resistor.

Therefore, the regulator must be configured with different characteristics for each different product.

The pads are usually configured by an operator who, upon identifying the product in question, directly configures the characteristics of the regulator.

However, this approach has serious drawbacks.

Firstly, the resistivity of the cables used is not well known or uniform, due to the fact that the supplier supplies said cables with certain predetermined manufacturing tolerances. Subsequently, the operator in charge of adjusting the resistive cable to the length of each model also does so applying a certain tolerance. The result is that the pads, while belonging to the same model, have variations and, consequently, a configuration based on an envisaged resistivity and length, does not guarantee subsequent precise temperature control.

Additionally, this manner of configuring the regulators requires an operator and is also difficult to automate.

Likewise, in these types of devices it is usual to subsequently verify that the general configuration of the regulator is adequate for operating with the heating resistor controlled by the regulator. This control step also involves relatively complex steps, due to which it is expensive and difficult to automate.

Therefore, the applicant deems it necessary to provide a solution to the state of the art that will solve the problems posed, i.e. that will provide the optimum configuration for each pad at minimum cost, and that also allows an inexpensive verification process with the highest possible degree of automation.

### DESCRIPTION OF THE INVENTION

To this end, the present invention proposes a process for configuring a heating resistor regulator control element wherein a representative parameter of the heating resistor is recorded in a memory of said regulator, said control element being configured with software that uses said parameter to regulate the power supplied to said heating resistor in order to reach the desired temperature, **characterised in that** it comprises the following steps:
a) connecting the regulator to the mains,
b) determining a representative parameter of the heating resistor controlled by the regulator, and
c) recording said parameter in the regulator's memory, in such a manner that the control element assigned to each heating resistor can be automatically configured upon connecting the regulator to the mains.

With the characteristics of the process of the invention:
- Each heating resistor, regardless of the resistivity tolerances and length, will be associated with a regulator configured to operate specifically therewith. This will allow adaptation to any pad model, even new models, in a versatile and automatic manner.
- Configuration will be performed automatically, whereupon it will only require connection of the pad's power supply to the mains, a process which would be easy to automate if necessary to lower costs even further. "Connection" is understood to mean that the device is powered up, due to which the inclusion of a switch or push-button to supply power or any other control element that would allow automation of the process, if necessary, could be envisaged.

Preferably, step c) is only executed if the parameter determined in step b) does not exceed a certain threshold value Rₜ.

In this manner, if the regulator is connected without having a resistor connected, the resistor is not recorded. In particular, this allows detection of a wrong connection or any other verification of the device.

More preferably, if step c) is executed, a step d) is executed consisting of recording the execution of step c) in the memory and, even more preferably, execution of step d) is indicated by means of a visual indicator, in such a manner that there is a record for future verifications and, likewise, execution of the recording of the resistor can be visually detected.

More advantageously, if step d) has been previously executed, step b) is not executed again during the regulator start-up process, whereupon a visual indicator indicates that steps b), c) and d) have already been correctly executed.

Even more preferably, execution of steps b) and c) is indicated by means of a visual indicator.

More advantageously, a visual indicator indicates whether the parameter determined in step b) exceeds said certain threshold value Rₜ, in such a manner that it is possible to visually detect if a resistor is wrongly connected.

Likewise, the invention relates to a heating resistor regulator verification process having a control element and means for connection to a power source, **characterised in that** it comprises the following steps:
e) connecting the regulator to a power source,
f) generating electricity consumption by means of the regulator and pad assembly, the temporal profile of which is susceptible of representing information relative to the regulator, and
g) determining, by reading the consumption of the temporal profile of the electricity consumption generated, in such a manner as to enable, solely based on the electricity consumed by the regulator and pad assembly, transmission of the information stored in the regulator to an external verification unit capable of metering said electricity consumption.

Therefore, by simply connecting the regulator, it can generate a consumption the temporal profile of which can contain information. This temporal profile can consist of interruptions in consumption during certain periods or consumption levels or slopes, provided that they can serve as information mediums. A person skilled in the art will know what code to use for each type of information.

In order to complete the transmission of information on regulator consumption, there must be equipment capable of converting said consumption into information that is subsequently used for verification.

Preferably, said information transmitted in said verification process can be representative of:
- the software version of the regulator and/or,
- an integrity index of said software and/or,
- the value of a representative parameter of the heating resistor (3) and/or,
- the type of regulator.

In this manner, the quality control steps are automatically executed, guaranteeing the minimum possible error.

Even more preferably, said verification process is carried out after executing step c), in such a manner that configuration of the regulator and verification of correct execution thereof can be performed automatically, within a short period of time and in a single action.

The invention also relates to a heating resistor regulator equipped with a control element and means of connection to a power source, said control element being configured with software that uses a representative parameter of the heating resistor to regulate the power supplied to said heating resistor to reach a desired temperature, **characterised in that** it comprises means for determining a representative parameter of the heating resistor susceptible of being recorded in a memory of the regulator, in such a manner that it allows automatic configuration of the control element based on the heating resistor by means of said parameter by simply connecting the regulator to the mains.

This regulator, which is the result of the same inventive concept, allows execution of the previously described configuration process.

Preferably, said control element is a microprocessor or programmable element.

More preferably, the memory comprises a record that indicates whether or not a value of the representative parameter of the heating resistor has been stored.

Finally, the invention relates to a heating pad and regulator assembly of the invention such as that described.

### BRIEF DESCRIPTION OF THE DRAWINGS

In order to better understand the foregoing, drawings are attached wherein, schematically and by way of non-limiting example, a practical case of embodiment is represented.
Figure 1 shows a diagram wherein the different blocks that constitute the pad and regulator assembly can be observed.
Figure 2 shows a flowchart that illustrates aspects of the process of the invention.

### DESCRIPTION OF A PREFERRED EMBODIMENT

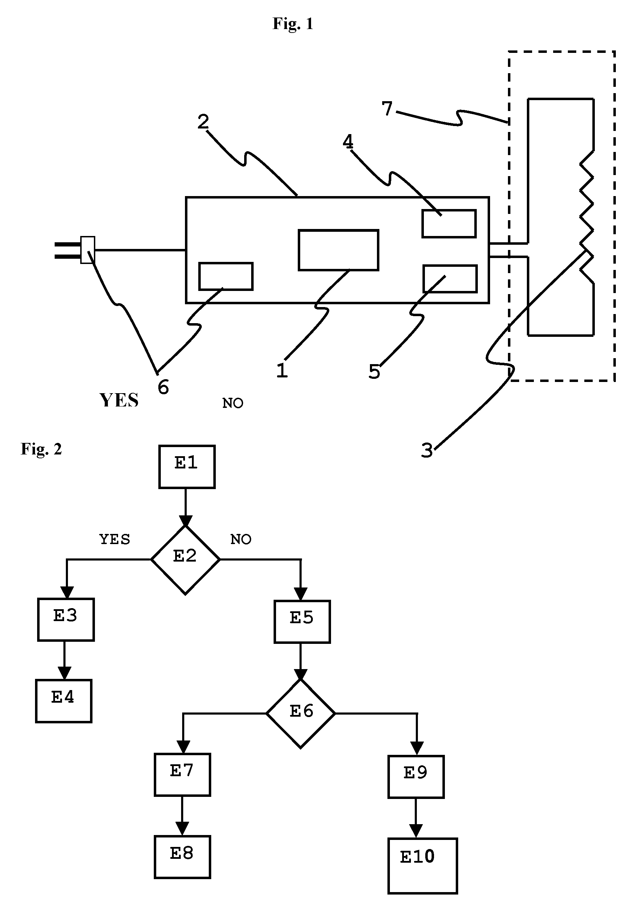

In reference to figure 1, the invention relates to a process for configuring a heating resistor 3 regulator 2 control element 1 wherein a representative parameter of the heating resistor 3 is recorded in a memory 4 of said regulator 2.

The control element, in an already known manner, is configured with software that uses the representative parameter of the heating resistor to regulate the power supplied to the heating resistor 3 for the purpose of adjusting the resistor temperature to the desired temperature.

Specifically, the invention is **characterised in that** it comprises the following steps:
a) connecting the regulator 2 to the mains,
b) determining a representative parameter of the heating resistor 3 controlled by the regulator 2, and
c) recording said parameter in the memory of the regulator 2.

In this manner, configuration of the control element 1 assigned to each heating resistor 3 can be performed automatically upon connecting the regulator 2 to the mains. It must be pointed out that "connection to the mains" should be understood to be equivalent to powering up the device, either by means of batteries or an autonomous power generation unit. What is relevant is that the device be powered up.

The parameter measured can be any parameter which allows characterisation of the resistor connected to the regulator, the value of which is subsequently stored in a memory of the device at the control software's disposal.

In particular, the software already has information relative to the temperature coefficient of resistance, which will be positive in general, but which for certain materials can also be null, and only needs to know the resistance of the heating resistor to a known temperature coefficient of resistance for the whole range of use of the device.

The process of the invention has other advantages, such as for example detecting a wrong connection during assembly of the resistor to the regulator. In this case, the process of the invention envisages that step c) will only be executed if the parameter determined in step b) fulfils certain conditions, such as for example not exceeding a certain threshold value Rₜ.

Optional embodiments of the process of the invention are described below with reference to figure 2.

Specifically, in a first step E1 the device is switched on. At that moment the control element consults E2 the preliminary execution record of the resistor record.

If the result is affirmative, which means that the configuration has already been performed, it is indicated E3 by means of a visual indicator and the product starts up normally E4.

However, if the resistor value has not yet been recorded in the memory, the value of the representative parameter of the resistor is measured E5.

At that moment E6, if that value exceeds a certain threshold value, it means that there is no connected resistor or that this connection was not performed correctly, whereupon a visual indicator E9 is activated and the product quality verification function E10 is initiated.

If, however, the value of the parameter does not exceed the threshold value Rₜ, said value is recorded E7 in the memory, visually indicating E8 that it has been correctly saved.

## Claims

1. Process for configuring control element (1) of a regulator (2) for a heating resistor (3), wherein a representative parameter of the heating resistor (3) is recorded in a memory (4) of said regulator (2), said control element being configured with software that uses said parameter to regulate the power supplied to said heating resistor (3) in order to reach the desired temperature, **characterised in that** it comprises the following steps:
a) connecting the regulator (2) to the mains,
b) determining a representative parameter of the heating resistor (3) controlled by the regulator (2),
c) recording said parameter in the memory of the regulator (2), in such a manner that configuration of the control element (1) assigned to each heating resistor (3) can be performed automatically upon connecting the regulator (2) to the mains.

2. Process, according to claim 1, wherein step c) is only executed if the parameter determined in step b) does not exceed a certain threshold value Rₜ.

3. Process, according to any of the preceding claims, wherein, if step c) is executed, a step d) is executed consisting of recording the execution of step c) in the memory.

4. Process, according to the preceding claim, wherein the execution of step d) is indicated by means of a visual indicator (4).

5. Process, according to claim 3, wherein, if step d) has previously been executed, step b) is not executed again during the regulator initialization process and a visual indicator (4) indicates that steps b) and c) had already been executed.

6. Process, according to any of the preceding claims, wherein the execution of steps b) and c) is indicated by means of a visual indicator (4).

7. Process, according to claim 2, wherein a visual indicator indicates whether the parameter determined in the step b) exceeds said certain threshold value Rₜ.

8. Process for verifying a heating resistor (3) regulator (2) having a control element (1) and means for connection to a power source (6), **characterised in that** it comprises the following steps:
e) connecting the regulator (2) to a power source (6),
f) generating electricity consumption by means of the regulator and pad assembly, the temporal profile of which is susceptible of representing information relative to the regulator (2),
g) determining, by reading the consumption, the temporal profile of the electricity consumption generated in such a manner as to enable, solely based on the electricity consumed by the regulator and pad assembly, to transmit information stored in the regulator to an external verification unit capable of measuring said electricity consumption.

9. Process, according to claim 9, wherein said information can be representative of:
- the version of the regulator software and/or,
- an index of integrity of said software and/or,
- the value of a representative parameter of the heating resistor (3) and/or,
- the type of regulator.

10. Process, according to any of the two preceding claims and any of claims 1 to 7, which is carried out after executing step c).

11. Heating resistor (3) regulator (2) having a control element (1) and means for connection to a power source (6), said element control (1) being configured with software that uses a representative parameter of the heating resistor (3) to regulate the power supplied to said heating resistor (3) in order to reach the desired temperature, **characterised in that** it comprises means (5) for determining a representative parameter of the heating resistor (3) susceptible of being recorded in a memory of the regulator, in such a manner as to allow automatic configuration of the control element (1) in accordance with the heating resistor (3) by means of said parameter by simply connecting the regulator (2) to the mains.

12. Regulator (2), according to the preceding claim, wherein said control element (1) is a microprocessor or programmable element.

13. Regulator, according to any of the two preceding claims, wherein the memory comprises a record that indicates whether or not the value of said parameter has been stored in the memory.

14. Heating pad (8) and regulator (2) assembly, according to any of claims 11 to 13.
